# EUROPÄISCHE PATENTSCHRIFT

(11) **EP 0 652 170 B1**
(45) Veröffentlichungstag und Bekanntmachung des Hinweises auf die Patenterteilung: **04.06.1997**
(21) Anmeldenummer: 94116665.4
(22) Anmeldetag: 21.10.1994
(51) Int. Cl.: B65G 17/44

(54) **Hohlbolzen-Gelenkkette**
Link chain with hollow pins
Chaîne à maillons articulés avec axes creux

(30) Priorität: 10.11.1993 DE 9317226 U
(43) Veröffentlichungstag der Anmeldung: 10.05.1995
(73) Patentinhaber: JOH. WINKLHOFER & SÖHNE GmbH & Co KG, D-81369 München (DE)
(72) Erfinder: Koschig, Richard, D-85354 Freising (DE)
(74) Vertreter: Grünecker, Kinkeldey, Stockmair & Schwanhäusser Anwaltssozietät

(56) Entgegenhaltungen:
- US-A- 4 518 077
- US-A- 4 927 002
- US-A- 4 950 398

## Beschreibung

Die Erfindung betrifft eine Hohlbolzen-Gelenkkette der im Oberbegriff des Patentanspruch 1 angegebenen Art sowie einen Adapter gemäß Anspruch 13.

Bei einer Gelenkkette gemäß DE-U 77 37 243 ist der Adapterfuß im Hohlbolzen durch eine mit Krallen bewehrte, auf das überstehende Einsteckende des Adapterfußes aufgesteckte Sicherungskappe gesichert. Die Sicherungskappe ist ein getrennt herstellbares und bereitstellbares Teil, zu dessen Demontage ein Werkzeug benötigt wird, und das nach der Demontage nicht mehr weiterverwendbar ist.

Bei einer aus DE-U 71 30 659 bekannten Gelenkkette bildet der Adapterfuß einen Gelenkbolzen der Kette. In das überstehende Einsteckende des Adapterfußes wird zur Sicherung ein Splint eingesetzt. Dieser ist ein gesondert herstellbarer und bereitstellbarer Teil bei der Montage des Adapters.

Bei einer aus DE-A-22 34 115 bekannten Hohlbolzen-Gelenkkette wird das über den Hohlbolzen vorstehende Einsteckende des Adpaterfußes durch Kaltverformen aufgeweitet. Die Montage des Adapters ist zeitaufwendig und erfordert Spezialwerkzeuge. Nach eine Demontage ist der Adapterfußes mehr oder nur mehr nach einer Nachbearbeitung verwendbar.

Bei einer aus DE-U 76 10 413 bekannten Hohlbolzen-Gelenkkette für eine Fördervorrichtung ist der Adapterfuß am Mitnehmer angeformt. Die Sicherung erfolgt durch einen Krallenring in einer Umfangsnut im Einsteckende. An der gegenüberliegenden Seite ist eine Preßhülse als Gegenanschlag auf den Adapterfuß aufgepreßt. Die Montage ist zeitaufwendig. Zur Demontage wird ein Spezialwerkzeug benutzt. Der Krallenring läßt sich nur einmal benutzen. Der Adapter ist vielteilig.

Aus DE-A 28 14 956 ist bekannt, bei einer Gelenkkette für eine Fördervorrichtung die Gelenkbolzen an einer Kettenseite verlängert auszubilden. Der Adapter ist eine Hülse, vorzugsweise eine längsgeschlitzte Hülse, die auf ein vorstehendes Gelenkbolzenende aufgepreßt, und in die der Mitnehmer eingepreßt wird. Die Montage und Demontage sind mühsam. Die reibungsschlüssige Halterung der Hülse birgt die Gefahr eines unkontrollierbaren Lockerns bzw. Abfallens der Hülse. Der Mehraufwand bei der Herstellung der Kette mit den verlängerten Gelenkbolzen ist hoch.

Bei einer aus US-A-49 50 398 bekannten Förderkette aus Kunststoffkomponenten ist der Adapter mit zwei in die Hohlbolzen eingesteckten Stiften festgelegt und durch außen eingeführte Splinte gesichert. In der Kette sind die Hohlbolzen durch eine aufgrund der Verformbarkeit des Kunststoffmaterials mögliche Verrastung festgelegt. Dabei ist innen in eine Bohrung einer angeformten Hülse einer Außenlasche ein Rastring eingeformt, der in eine Rastnut außen am Ende des Hohlbolzens einrastet.

Bei einer aus US-A-45 18 077 bekannten Hohlbolzen-Gelenkkette ist der Adapterfuß ein Zapfen, der duch den Hohlbolzen durchgesteckt und mit einem eine Rastnut aufweisenden vorderen Ende in eine Rastvertiefung der Seitenplatte des gegenüberliegenden Adapters eingerastet ist. Es sind stets zwei Seitenplatten an beiden Seiten der Kette erforderlich, selbst wenn nur ein Mitnehmer an eine Seite anzubringen ist.

Bei einer aus US-A-49 27 002 bekannten Förderkette mit an einer Kettenseite angebrachten Mitnehmern ist jeder Adapterfuß ein kurzer Hohlwellenstummel, der auf das verlängerte Ende des durch den Hohlbolzen gesteckten Gelenkzapfen mit einem Preßsitz aufgeschoben ist. Die nur reibungsschlüssige Sicherung des Adapters kann sich im Betrieb der Förderkette lösen.

Ein aus DE-A-26 13 118 bekannter Adapterteil besteht aus eine Gegenplatte mit zwei daran fest angebrachten Stiften, an deren Enden Umfangsnuten eingeformt sind. Die Stifte werden von der dem Mitnehmer gegenüberliegenden Seite der Kette durch die Hohlbolzen gesteckt, bis sie an der anderen Seite weit vorstehen. Der Adapter ist mit auf die vorstehenden Stiftenden passenden Hülsen aufgesteckt und besitzt eine quer nach unten ragende Zunge, die in die Umfangsnuten eingreift.

Bei einer aus DE-U-88 02 417 bekannten Kette ist jeder Mitnehmerbolzen mit einem Außengewinde versehen, mit dem er in ein Innengewinde des Hohlbolzens eingeschraubt ist.

Bei einem aus US-A-51 74 438 bekannten Segmentriemen aus ineinandergreifenden Segmenten rastet jeder Gelenkbolzen in Vertiefungen in Gelenkvorsprünge der Segmente ein.

Bei einer aus DE-C-17 81 377 bekannten Kette ist eine Mitnehmereinrichtung an Gelenkbolzen befestigt, die an beiden Enden vernietet sind.

Ein aus DE-A-27 14 237 bekanntes Verbindungselement zweier Ketten ist auf vorstehende Gelenkzapfen der Kette aufgesteckt. Das Verbindungselement wird durch einen beide Ketten verbindenden Querträger lagegesichert.

Bei eine aus FR-A-25 54 797 bekannten Gelenkkette wird ein Adapterteil von oben mit Krallen auf die Hülsen der Kette und zwischen die Kettenlaschen eingesteckt.

Bei einer aus FR-A-25 03 260 bekannten Kette wird ein Tragsattel für Mitnehmerkomponenten von oben auf die verängerten Gelenkbolzen der Kette aufgesteckt und formschlüssig verrastet. Der Tragsattel übergreift die Kette an beiden Seiten.

Der Erfindung liegt die Aufgabe zugrunde, eine Hohlbolzen-Gelenkkette der eingangs genannten Art sowie einen Adapter zum Anbringen eines Mitnehmers an einer solchen Gelenkkette zu schaffen, bei denen zur Ausziehsicherung des Adapterfußes so wenig Teile wie möglich gebraucht werden, bei denen der Adapterfuß wiederverwendbar und beliebig umgesetzt werden kann, und bei denen zur Montage und Demontage kein Spezialwerkzeug benötigt wird

Die gestellte Aufgabe wird erfindungsgemäß mit den Merkmalen des Patentanspruchs 1 gelöst.

Bei dieser Ausbildung verfügt der Adapterfuß selbst über die zur Ausziehsicherung benötigten Komponenten, so daß zur Ausziehsicherung keine zusätzlich herstellbaren oder bereitstellbaren Teile benutzt werden. Das Rastelement wird durch die elastische Rückstellkraft selbsttätig in die Haltestellung gebracht, in der der Adapterfuß formschlüssig gegen Herausziehen gesichert ist. Die Montage und Demontage des Adapterfußes ist einfach und rasch durchführbar, und zwar ohne Verwendung eines Spezialwerkzeuges. Der Adapterfuß läßt sich rasch umsetzen und beliebig oft wieder verwenden.

Eine baulich einfache und zweckmäßige Ausführungsform geht aus Anspruch 2 hervor. Der Adapterfuß läßt sich mit der Rastnase voran durch den Hohlbolzen einstecken. Die nach außen weisende Rastnase verriegelt dann den Adapterfuß gegen Herausziehen. Die Rastzunge läßt sich einerseits leicht elastisch verformen. Andererseits sichert sie den Eingriff der Rastnase.

Eine kurze Bauweise des Adapterfußes ergibt sich bei der Ausführungsform gemäß Anspruch 3. Es ist aber auch denkbar, zum erleichterten Verstellen der Rastnase das freie Ende der Rastzunge über die Rastnase hinaus zu verlängern .

Ein fester Sitz des Adapterfußes ergibt sich bei der Ausführungsform gemäß Anspruch 4. Der Adapterfuß läßt sich wegen der in etwa quer zur Längsachse liegenden Anschlagfläche auch bei großer einwirkender Kraft nicht mehr aus dem Hohlbolzen herausziehen, solange nicht die Rastzunge gewollt verstellt wird.

Alternativ ist die Ausführungsform gemäß Anspruch 5 zweckmäßig. Hier wird die Rampe dazu benutzt, durch entsprechenden Zug am Adapterfuß die Rastnase so zu verstellen, daß sich der Adapterfuß herausziehen läßt. Zweckmäßigerweise ist die Kraft, mit der sich die Rastnase unter der Wirkung der Rampe verstellt, so hoch gewählt, daß der Adapter im Betrieb nicht selbsttätig herausgezogen wird.

Eine weitere, zweckmäßige Ausführungsform geht aus Anspruch 6 hervor. Die Einführschräge erleichtert das Einführen des Adapterfußes in den Hohlbolzen, weil sie die Rastnase selbsttätig verstellt, sobald ausreichender Druck in Einsteckrichtung ausgeübt wird.

Ein guter Formschluß und nur wenig überstehende Teile sind bei der Ausführungsform gemäß Anspruch 7 gegeben.

Bei der Ausführungsform gemäß Anspruch 8 ergibt sich eine wirksame Ausziehsicherung mit mehreren Rastelementen, die, da sie einander unterstützen, für sich relativ grazil ausgebildet sein können.

Eine baulich einfache, herstellungstechnisch gut zu beherrschende und funktionssichere Ausführungsform geht aus Anspruch 9 hervor. Der offene Längsschlitz im Adapterfuß erbringt die notwendige Elastizität der Rastzungen sowie einen zum Ausziehen und Einstecken ausreichenden Verstellweg der Rastelemente.

Bei der Ausführungsform gemäß Anspruch 10 sorgt die Anlageschulter am gegenüberliegenden Ende des Adapterfußes für die Sicherung des auch gegen Ausziehen durch die Rastelemente gesicherten Adapterfußes.

Bei der Ausführungsform gemäß Anspruch 11 wird der Mitnehmer in der Aufnahme festgelegt, z.B. eingegossen, eingeklebt, eingeschraubt oder durch ein Querelement gesichert.

Die in Anspruch 12 erwähnte Ausbildung des Adapters bzw. Adapterfußes aus Kunststoff oder Leichtmetall führt zu einembesonders geringen Gewicht. Bei der oftmals großen Zahl von an einer Gelenkkette angebrachten Mitnehmern bzw. Adaptern ist dies ein wichtiger Gesichtspunkt. Gerade verstärkter Kunststoff ermöglicht eine hohe Festigkeit bei extrem geringem Gewicht. Der Adapter könnte aber auch ein Preßformteil aus Leichtmetall oder einer spezifisch leichten Legierung sein.

Anhand der Zeichnung werden Ausführungsformen der Erfindung erläutert. Es zeigen:
Fig. 1 eine Schnittansicht einer Hohlbolzen-Gelenkkette mit einem Mitnehmer,
Fig. 2 einen Adapter, wie er in Fig. 1 verwendet wird, in einem Längsschnitt,
Fig. 3 einen Längsschnitt einer abgeänderten Ausführungsform eines Adapters, und
Fig. 4 eine Frontansicht des Adapters von Fig. 3.

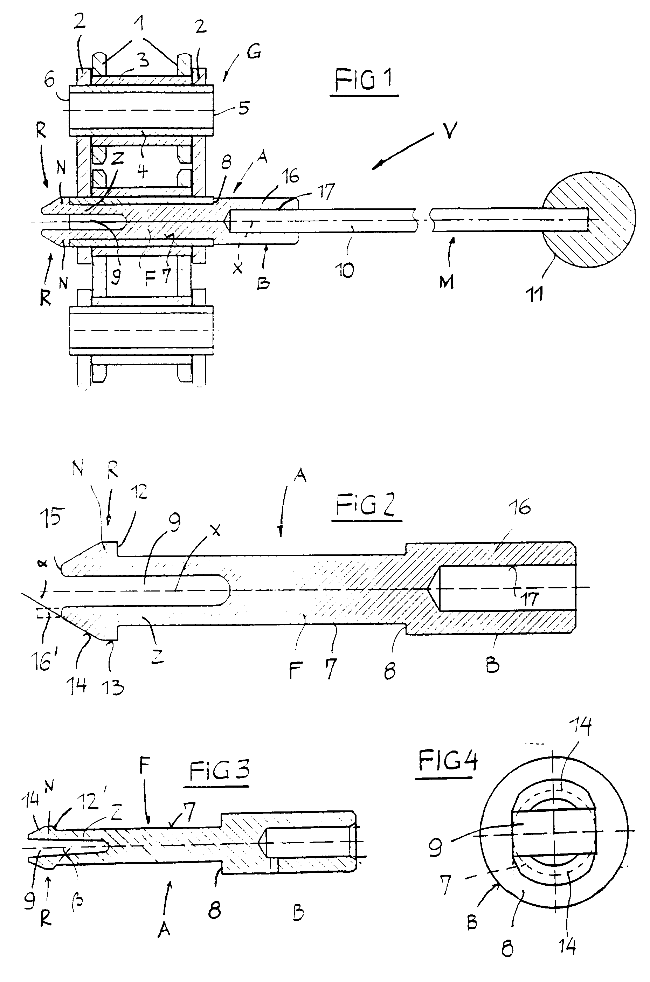

An einer Hohlbolzen-Gelenkkette G für eine Fördervorrichtung V, z.B. einer Fördervorrichtung von Dosen- oder Tubenrohlingen durch eine Lackier- und Heizstation, sind in vorbestimmten Abständen Mitnehmer M angebracht, von denen in Fig. 1 einer gezeigt ist. Jeder Mitnehmer M ist mittels eines ohne Spezialwerkzeug montierbaren und demontierbaren Adapters A in einem Gelenk der Gelenkkette G festgelegt.

Die Gelenkkette G besteht aus paarweise beabstandet angeordneten Innenlaschen 1, paarweisen Außenlaschen 2, jeweils einer die Innenlaschen 1 verbindenden Hülse 3 und jeweils einem die Hülse 3 durchsetzenden und in den Außenlaschen 2 festgelegten Hohlbolzen 4. Auf der Hülse 3 kann jeweils eine Rolle (nicht gezeigt) gelagert sein. Die Stirnenden jedes Hohlbolzens 4 sind mit 5 und 6 bezeichnet.

Der Adapter A ist mit einem Adapterfuß F ausziehgesichert in den jeweiligen Hohlbolzen 4 eingesteckt. Zur Ausziehsicherung des Adapterfußes F ist wenigstens ein angeformtes Rastelement R vorgesehen, das elastisch rückstellend zwischen der in Fig. 1 gezeigten Haltestellung, in der es mit dem Stirnende 6 des Hohlbolzens 4 verrastet ist, und einer nicht gezeigten Ausziehstellung durch Druck auf das Rastelement in Richtung zur mit X bezeichneten Längsachse des Adapterfußes F hin verstellbar, damit der Addapterfuß einerseits eingesteckt und andererseits wieder herausgezogen werden kann.

Der Adapterfuß besitzt einen stiftartigen Grundkörper 7, der mit einer vorbestimmten Passung in den Hohlbolzen 4 paßt. Dem Rastelement R abgewandt ist am Adapterfuß F eine Anlageschulter 8 angeformt, die zur Lagesicherung am anderen Stirnende 5 des Hohlbolzens 4 dient. In Fig. 2 sind zwei Rastelemente R dargestellt, von denen jedes aus einer federnden Rastzunge Z und einer davon nach außen weisenden Rastnase N besteht. Die Rastzungen Z sind durch einen Schlitz 9 im Adapterfuß F voneinander getrennt, der zum Einsteckende hin offen ist und sich so weit in Axialrichtung in den Adapterfuß F hineinersteckt, daß die Rastelemente R problemlos verstellt werden können und sich mit ausreichender Rückstellkraft in die dargestellte Haltestellung zurückbewegen.

Am dem Einsteckende gegenüberliegenden Ende ist eine Aufnahme B für den Mitnehmer M vorgesehen, der im gezeigten Ausführungsfall ein Stift 10 mit einer Endkappe 11 ist. Der Stift 10 wird in einer Aufnahmebohrung 17 der Aufnahme B, die als angeformte Hülse 16 ausgebildet ist, z.B. durch Verkleben oder Eingießen gesichert. Es ist denkbar, den Adapter A direkt einstückig mit dem Mitnehmer M auszubilden.

In der vergrößerten Schnittansicht gemäß Fig. 2 ist erkennbar, daß der Adpater A an der Rastnase N jedes Rastelementes R eine dem freien Ende 15 abgewandt liegende und in etwa zur Längsachse X senkrecht verlaufende Anschlagfläche 12 aufweist, die in der Haltestellung das als Gegenrast dienende Stirnende 6 des Hohlbolzen 4 hintergreift. Die in radialer Richtung gesehene Höhe der Anschlagfläche 12 entspricht, z.B., annähernd der radialen Wandstärke des Hohlbolzens 4. Im Anschluß an die Anschlagfläche 12 ist außen auf der Rastnase N eine ebene, vorzugsweise zylindrische Fläche 13 vorgesehen, von der sich eine ebene oder kegelige Einführschräge 14 bis zum freien Ende 15 erstreckt. Der Neigungswinkel der Einführschräge 14 beträgt z.B. 25° (Winkel α). Bei 16 ist angedeutet, daß das freie Ende der Rastzungen über die Rastnase hinaus verlängert sein kann, um einen besseren Angriff zum Verstellen der Rastelemente zu haben. Der Schlitz 9 ist so weit, daß er das Zueinanderdrücken der Flächen 13 bis auf den Außendurchmesser des Bolzens 7 ermöglicht.

Bei der Ausführungsform der Fig. 3 und 4 ist in Abänderung zur Ausführungsform der Fig. 1 und 2 anstelle der quer zur Längsachse X liegenden Anschlagfläche eine schräge Rampe 12' an der Rastnase N vorgesehen, die sich in Ausziehrichtung zum Bolzen 7 hin verjüngt, z.B. mit einem Neigungswinkel β von ca. 45°.

Es würde ausreichen, nur ein Rastelement vorzusehen. Zweckmäßigerweise sind aber zwei oder sogar mehrere in Umfangsrichtung mit Zwischenabständen getrennte Rastelemente R vorgesehen. Der Adapter A oder zumindest der Adapterfuß F besteht aus einem Kunststoff, z.B. aus verstärktem Kunststoff oder aus Leichtmetall, um dem Adapter geringes Gewicht zu verleihen. Es ist aber auch denkbar, den Adapter A oder den Adapterfuß F aus herkömmlichem Metall, Stahl oder dgl., auszubilden.

Zur Montage des Adpaters A wird dieser mit den Rastelementen R an das Stirnende 5 des Hohlbolzens 4 angesetzt. Durch Zusammendrücken der Rastelemente oder auch nur unter der Wirkung der Einführschrägen 14 läßt sich das Einsteckende durch den Hohlbolzen 4 schieben, bis schließlich das Einsteckende über das Stirnende 6 vortritt. Dann springen die Rastelemente R nach außen in die in Fig. 1 gezeigte Haltestellung, in der der mit der Anlageschulter 8 am Stirnende 5 anliegende Adapterfuß gegen Ausziehen gesichert ist. Zur Demontage werden die Rastelemente R in Richtung zur Längsachse X zusammengedrückt, damit sich der Adapterfuß F herausziehen läßt. Bei der Ausführungsform gemäß Fig. 3 ist das Herausziehen erleichtert. Gegebenenfalls werden über die Rampen 12' die Rastelemente R allein durch die zum Ausziehen ausgeübte Zugkraft zueinander gedrückt, so daß die Montage und die Demontage vollständig ohne Werkzeug oder ohne Angreifen an den Rastelementen vollziehbar ist. Dies ist z.B. zweckmäßig, bei einer Gelenkkette, die so eingebaut ist, daß ihre den Mitnehmern abgewandte Seite nicht oder nur sehr schwer zugänglich ist.

Die wesentlichen Merkmale der vorerwähnten Ausführungsformen sind:

Universell kombinationsfähiges Mitnehmersystem für herkömmliche Hohlbolzen-Gelenkketten verschiedener Ausführungen.

Beliebig montier- und austauschbare Adapter aus Kunststoff oder anderen, leichten alternativen Werkstoffen, wobei die Adapter ohne spezielle Werkzeuge montier- bzw. demontierbar sind.

An der Gelenkkette lassen sich so verschiedene Förderkombinationen für unterschiedliche Produkte und Werkzeuge ohne großen Aufwand erzeugen.

Die Kombination der Hohlbolzen-Gelenkkette mit Kunststoff- bzw. Leichtmetallteilen führt zu einer erheblichen Gewichtsreduzierung des Systems. Die Adapter mit den Mitnehmern oder ohne den Mitnehmern lassen sich auch von ungeübten Personen rasch und beliebig umsetzen sowie anbringen, wobei jeweils eines sehr wirksame Ausziehsicherung erreicht wird. Das Einrasten der Rastelemente ist deutlich spürbar bzw. hörbar, so daß bei der Montage keine besondere Sorgfalt aufgewandt zu werden braucht. Der Formschluß des oder der Rastelemente sichert den Adapter sehr zuverlässig gegen Herausziehen aus dem Hohlbolzen.

## Patentansprüche

1. Hohlbolzen-Gelenkkette einer Fördervorrichtung, mit wenigstens einem Adapter zum Anbringen eines Mitnehmers an der Gelenkkette, wobei der Adapter mit einem Adapterfuß lösbar in einem Hohlbolzen ausziehgesichert ist, **dadurch gekennzeichnet**, daß der Adapterfuß (F) an seinem Einsteckende wenigstens ein zwischen einer Haltestellung und einer Ausziehstellung elastisch rückstellend verstellbares Rastelement (R) aufweist, von dem in der Haltestellung eine Gegenrast am Hohlbolzen (4) zumindest formschlüssig hintergreifbar ist.

2. Gelenkkette nach Anspruch 1, **dadurch gekennzeichnet,** daß das Rastelement (R) eine Rastzunge (Z) mit einer nach außen weisenden Rastnase (N) ist.

3. Gelenkkette nach Anspruch 2, **dadurch gekennzeichnet,** daß die Rastnase (N) am freien Ende (15) der Rastzunge (Z) angeordnet ist.

4. Gelenkkette nach Anspruch 2, **dadurch gekennzeichnet,** daß die Rastnase (N) - an ihrer dem freien Ende (15) der Rastzunge (Z) abgewandten Seite - ein in etwa quer zur Längsachse (X) des Adapterfußes (F) liegende Anschlagfläche (12) aufweist.

5. Gelenkkette nach Anspruch 2, **dadurch gekennzeichnet,** daß die Rastnase (N) - an ihrer dem freien Ende (15) der Rastzunge (Z) abgewandten Seite - eine von außen nach innen und vom freien Ende (15) weg geneigte Rampe (12'), vorzugsweise mit einem Neigungswinkel (β) von ca. 45° aufweist.

6. Gelenkkette nach Anspruch 2, **dadurch gekennzeichnet,** daß die Rastnase (N) zum freien Ende (15) hin eine Einführschräge (14), vorzugsweise mit einem Neigungswinkel (α) von etwa 25° gegenüber der Längsachse (X) des Adapterfußes (F), aufweist.

7. Gelenkkette nach Anspruch 2, **dadurch gekennzeichnet,** daß die Höhe der Rastnase (N) in etwa der Wandstärke des Hohlbolzens (4) entspricht, und daß die Stirnseite (6) des Hohlbolzens (4) die Gegenrast für die Rastnase (N) bildet.

8. Gelenkkette nach Wenigstens einem der Ansprüche 1 bis 7, **dadurch gekennzeichnet,** daß zwei oder mehrere in Umfangsrichtung um die Längsachse (X) des Adapatertfußes (F) mit Zwischenabständen verteilt angeordnete Rastelemente (R) vorgesehen sind.

9. Gelenkkette nach Anspruch 8, **dadurch gekennzeichnet,** daß zwei Rastzungen (Z) durch einen zu den freien Enden der Rastzungen (Z) offener Längsschlitz (9) im Adapterfuß (F) getrennt sind, dessen Weite annähernd der doppelten Höhe entspricht, über die jede Rastnase (N) aus der Haltestellung in die Ausziehstellung verstellbar ist.

10. Gelenkkette nach einem der Ansprüche 1 bis 9, **dadurch gekennzeichnet**, daß der Adapterfuß (F) in einem der Länge des Hohlbolzens (4) annähernd entsprechenden Abstand von der Rastnase (N) bzw. den Rastnasen (N) eine Anlageschulter (8) aufweist.

11. Gelenkkette nach einem der Ansprüche 1 bis 10, **dadurch gekennzeichnet**, daß am Adapterfuß (F) eine Aufnahme (B) zum Festlegen des Mitnehmers (M) vorgesehen ist.

12. Gelenkkette nach einem der Ansprüche 1 bis 11, **dadurch gekennzeichnet**, daß der Adapter (A) bzw. Adapterfuß (F) aus Kunststoff, vorzugsweise aus verstärktem Kunststoff, Leichtmetall, Metall oder einer Legierung besteht.

13. Adapter zum lösbaren Befestigen eines Mitnehmers an einer Hohlbolzen-Gelenkkette gemäß wenigstens einem der Ansprüche 1 bis 12, **dadurch gekennzeichnet**, daß am Einsteckende eines Adapterfußes (F) des Adapters (A) wenigstens ein elastisch rückstellend aus einer von der Längsachse (X) des Adapterfußes (F) weggespreizten Haltestellung in Richtung zur Längsachse (X) verstellbares Rastelement (R) angeordnet ist.

## Claims

1. Hollow-pin flat-link articulated chain of a conveying device, with at least one adapter for mounting a driver on the chain, the adapter being mounted with an adapter base releasably in a hollow pin to prevent it from being pulled out, characterised in that the adapter base (F) at its insertion end comprises at least one latch element (R) which is displaceable resiliently between a retaining position and a pull-out position, and which in the retaining position can engage behind a counterlatch on the hollow pin (4) at least in form-locking relationship.

2. Flat-link articulated chain according to claim 1, characterised in that the latch element (R) is a latch tongue (Z) with an outwardly pointing latch projection (N).

3. Flat-link articulated chain according to claim 2, characterised in that the latch projection (N) is arranged at the free end (15) of the latch tongue (Z).

4. Flat-link articulated chain according to claim 2, characterised in that the latch projection (N) - on its side facing away from the free end (15) of the latch tongue (Z) - comprises a stop face (12) located more or less transversely to the longitudinal axis (X) of the adapter base (F).

5. Flat-link articulated chain according to claim 2, characterised in that the latch projection (N) - on its side facing away from the free end (15) of the latch tongue (Z) - comprises a ramp (12') inclined from the outside to the inside and away from the free end (15), preferably with an angle of inclination (β) of about 45°.

6. Flat-link articulated chain according to claim 2, characterised in that the latch projection (N) towards the free end (15) comprises an insertion slope (14), preferably with an angle of inclination (α) of about 25° relative to the longitudinal axis (X) of the adapter base (F).

7. Flat-link articulated chain according to claim 2, characterised in that the height of the latch projection (N) more or less corresponds to the wall thickness of the hollow pin (4), and in that the end face (6) of the hollow pin (4) forms the counterlatch for the latch projection (N).

8. Flat-link articulated chain according to one or more of claims 1 to 7, characterised in that two or more latch elements (R) distributed with intermediate gaps in the circumferential direction around the longitudinal axis (X) of the adapter base (F) are provided.

9. Flat-link articulated chain according to claim 8, characterised in that two latch tongues (Z) are separated by a longitudinal slot (9) in the adapter base (F), which opens towards the free ends of the latch tongues (Z) and of which the width approximately corresponds to twice the height over which each latch projection (N) is displaceable out of the retaining position into the pull-out position.

10. Flat-link articulated chain according to one or more of claims 1 to 9, characterised in that the adapter base (F) comprises a contact shoulder (8) at a distance from the latch projection (N) or projections (N) approximately corresponding to the length of the hollow pin (4).

11. Flat-link articulated chain according to one or more of claims 1 to 10, characterised in that on the adapter base (F) is provided a holder (B) for fixing the driver (M).

12. Flat-link articulated chain according to one or more of claims 1 to 11, characterised in that the adapter (A) or adapter base (F) is made of plastic, preferably reinforced plastic, light metal, metal or an alloy.

13. Adapter for releasably fastening a driver to a hollow-pin flat-link articulated chain according to one or more of claims 1 to 12, characterised in that at the insertion end of an adapter base (F) of the adapter (A) is arranged at least one latch element (R) which is displaceable resiliently out of a retaining position forced apart from the longitudinal axis (X) of the adapter base (F), in a direction towards the longitudinal axis (X).

## Revendications

1. Chaîne articulée à axes creux pour un dispositif convoyeur, comprenant au moins un adaptateur permettant le montage d'un entraîneur sur la chaîne articulée, l'adaptateur étant logé de façon démontable dans un axe creux, de façon protégée contre l'arrachement, par l'intermédiaire d'un pied d'adaptateur, caractérisée en ce que le pied d'adaptateur (F) comporte, au niveau de son extrémité d'emmanchement, au moins un élément d'arrêt (R) pouvant être déplacé et élastiquement rappelé entre une position de maintien et une position d' extraction, et qui, en position de maintien, s'engage au moins par conjugaison des formes sous un contre-appui ménagé sur l'axe creux (4).

2. Chaîne articulée selon la revendication 1, caractérisée en ce que l'élément d'arrêt (R) est constitué par une languette d'arrêt (Z) pourvue d'un cran d'arrêt (N) dirigé vers l'extérieur.

3. Chaîne articulée selon la revendication 2, caractérisée en ce que le cran d'arrêt (N) est disposé à l'extrémité libre (15) de la languette d'arrêt (Z).

4. Chaîne articulée selon la revendication 2, caractérisée en ce que le cran d'arrêt (N) présente - du côté dirigé vers l'opposé de l'extrémité libre (15) de la languette d'arrêt (Z) - une surface de butée (12) s'étendant à peu près perpendiculairement à l'axe longitudinal (X) du pied d'adaptateur (F).

5. Chaîne articulée selon la revendication 2, caractérisée en ce que le cran d'arrêt (N) présente - du côté dirigé vers l'opposé de l'extrémité libre (15) de la languette d'arrêt (Z) - une rampe (12') inclinée de l'extérieur vers l'intérieur, en s'éloignant de l'extrémité libre (15), présentant de préférence un angle d'inclinaison (β) de l'ordre de 45°.

6. Chaîne articulée selon la revendication 2, caractérisée en ce que le cran d'arrêt (N) présente, en direction de l'extrémité libre (15), un chanfrein d'entrée (14) présentant de préférence un angle d'inclinaison (α) de l'ordre de 25° par rapport à l'axe longitudinal (X) du pied d'adaptateur (F).

7. Chaîne articulée selon la revendication 2, caractérisée en ce que la hauteur du cran d'arrêt (N) correspond à peu près à l'épaisseur de la paroi de l'axe creux (4), et en ce que la face frontale (6) de l'axe creux (4) constitue le contre-appui pour le cran d'arrêt (N).

8. Chaîne articulée selon l'une au moins des revendications 1 à 7, caractérisée en ce que deux ou plusieurs éléments d'arrêt (R) sont prévus, qui sont répartis dans le sens de la circonférence autour de l'axe longitudinal (X) du pied d'adaptateur (F) en étant séparés les uns des autres par des intervalles.

9. Chaîne articulée selon la revendication 8, caractérisée en ce que deux languettes d'arrêt (Z) sont séparées l'une de l'autre par une fente longitudinale (9) ouverte vers l'extrémité libre des languettes d'arrêt (Z), la largeur de la fente correspondant à peu près au double de la hauteur sur laquelle se déplace chacun des crans d'arrêt (N) de la position de maintien vers la position d'extraction.

10. Chaîne articulée selon l'une des revendications 1 à 9, caractérisée en ce que le pied d'adaptateur (F) comporte un épaulement de butée (8) disposé à une distance du cran d'arrêt (N) ou des crans d'arrêt (N), qui correspond à peu près à la longueur de l'axe creux (4).

11. Chaîne articulée selon l'une des revendications 1 à 10, caractérisée en ce qu'un logement (B) permettant la fixation d'un entraîneur (M) est prévu sur le pied d'adaptateur (F).

12. Chaîne articulée selon l'une des revendications 1 à 11, caractérisée en ce que l'adaptateur (A) ou le pied d'adaptateur (F) sont réalisés en une matière plastique, de préférence en une matière plastique armée, en un métal léger, en métal ou en un alliage.

13. Adaptateur permettant la fixation démontable d'un entraîneur sur une chaîne articulée à axes creux, selon l'une au moins des revendications 1 à 12, caractérisé en ce qu'au moins un élément d'arrêt (R) est prévu à l'extrémité d'emmanchement d'un pied d'adaptateur (F) d'un adaptateur (A), qui peut être déplacé en direction de l'axe longitudinal (X), en étant élastiquement rappelé, à partir d'une position de maintien écartée de l'axe longitudinal (X) du pied d'adaptateur (F).
